# EUROPEAN PATENT SPECIFICATION

(11) **EP 3 562 070 B1**
(45) Date of publication and mention of the grant of the patent: **02.02.2022**
(21) Application number: 17890892.7
(22) Date of filing: 20.12.2017
(51) Int. Cl.: H04L 1/00, H04L 5/00, H04L 1/16, H04W 72/12, H04L 27/34

(54) **DATA RECEIVING AND TRANSMITTING METHOD AND RECEIVING AND TRANSMITTING DEVICE**
DATENEMPFANGS- UND -SENDEVERFAHREN UND EMPFANGS- UND SENDEVORRICHTUNG
PROCÉDÉ DE RÉCEPTION ET DE TRANSMISSION DE DONNÉES ET DISPOSITIF DE RÉCEPTION ET DE TRANSMISSION

(30) Priority: 12.01.2017 CN 201710022855
(43) Date of publication of application: 30.10.2019
(73) Proprietor: Huawei Technologies Co., Ltd., Longgang District Shenzhen, Guangdong 518129 (CN)
(72) Inventor: FAN, Bo, Shenzhen Guangdong 518129 (CN); TANG, Xiaoyong, Shenzhen Guangdong 518129 (CN); LI, You, Shenzhen Guangdong 518129 (CN)
(74) Representative: Pfenning, Meinig & Partner mbB
(86) International application number: PCT/CN2017/117534
(87) International publication number: WO 2018/130054

(56) References cited:
- WO-A1-2016/208950
- CN-A- 106 231 614
- CN-A- 106 231 677
- QUALCOMM INCORPORATED: "URLLC/eMBB downlink dynamic multiplexing schemes", 3GPP DRAFT; R1-1700827, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Washington, USA; 20170116 - 20170120 10 January 2017 (2017-01-10), XP051203140, Retrieved from the Internet: URL:http://www.3gpp.org/ftp/tsg_ran/WG1_RL 1/TSGR1_AH/NR_AH_1701/Docs/ [retrieved on 2017-01-10]
- GUANGDONG OPPO MOBILE TELECOM: "On multiplexing eMBB and URLLC in DL", 3GPP DRAFT; R1-1700572, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 9 January 2017 (2017-01-09), XP051202304, Retrieved from the Internet: URL:http://www.3gpp.org/ftp/tsg_ran/WG1_RL 1/TSGR1_AH/NR_AH_1701/Docs/ [retrieved on 2017-01-09]
- INTEL CORPORATION: "Uplink URLLC Transmission Based on Scheduling Request and Grant", 3GPP DRAFT; R1-1700376 INTEL - UL SR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), XP051202854, Retrieved from the Internet: URL:http://www.3gpp.org/ftp/tsg_ran/WG1_RL 1/TSGR1_AH/NR_AH_1701/Docs/ [retrieved on 2017-01-10]
- INTERDIGITAL COMMUNICATIONS: "Preemption/superposition-based multiplexing of eMBB and URLLC", 3GPP DRAFT; R1-1700721 PREEMPTION SUPERPOSITION-BASED MULTIPLEXING OF EMBB AND URLLC, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG1, no. Spokane, USA; 20170116 - 20170120 10 January 2017 (2017-01-10), XP051203040, Retrieved from the Internet: URL:http://www.3gpp.org/ftp/tsg_ran/WG1_RL 1/TSGR1_AH/NR_AH_1701/Docs/ [retrieved on 2017-01-10]

## Description

### TECHNICAL FIELD

Embodiments of the present invention relate to the field of communications technologies, and in particular, to a data receiving method, a data sending method, a receiving device, and a sending device.

### BACKGROUND

A fifth generation (English: 5th generation, 5G for short) mobile communications system includes three application scenarios: enhanced mobile broadband (English: enhanced Mobile Broadband, eMBB for short), ultra-reliable and low latency communication (English: Ultra-Reliable and Low Latency Communication, URLLC for short), and massive machine type communication (English: massive Machine Type Communication, mMTC for short). Time-frequency resource multiplexing can be implemented for eMBB and URLLC by using a pre-emption technology, to transmit data by using a time-frequency resource more efficiently. Generally, the pre-emption technology means that when URLLC data needs to be sent but all time-frequency resources currently have been allocated, the URLLC data may occupy a time-frequency resource that has been allocated to eMBB data, and the eMBB data is no longer sent on the occupied time-frequency resource. In addition, to meet a low latency requirement to transmit the URLLC data anytime as needed, the URLLC data and control information of the URLLC data may be transmitted by occupying anytime the time-frequency resource that has been allocated to the eMBB data.

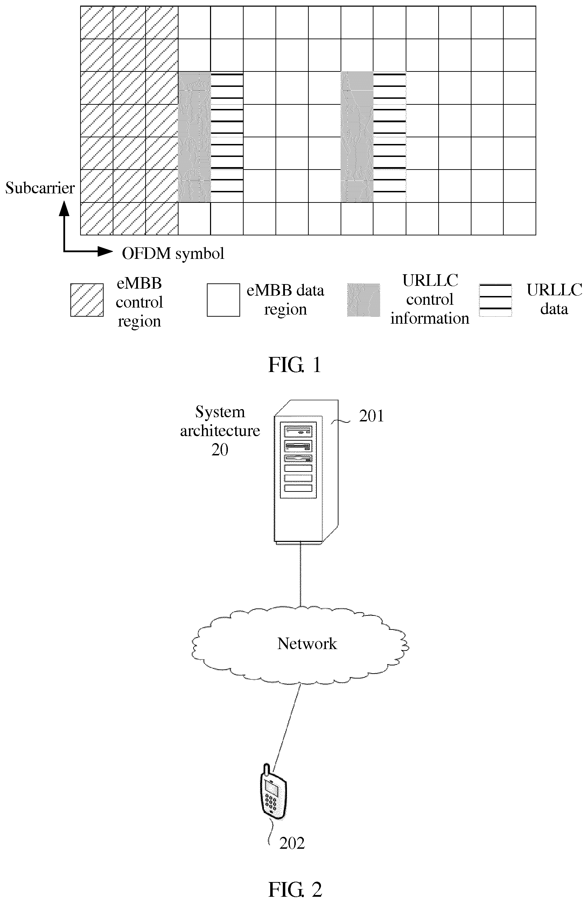

FIG. 1 is a schematic diagram of implementing time-frequency resource multiplexing for eMBB and URLLC by using the pre-emption technology. As shown in FIG. 1, time-frequency resources allocated to eMBB data include a control region and a data region. The control region is used to send eMBB control information. The data region is used to send the eMBB data, and URLLC data and control information of the URLLC data that are mapped to the data region by using the pre-emption technology. Both the URLLC data and the control information of the URLLC data that are mapped to the data region by using the pre-emption technology are located in the data region of the time-frequency resources, and occupy some time-frequency resources that should have been used to transmit the eMBB data. Sending of the eMBB data whose time-frequency resources are occupied is delayed.

In an existing LTE system, when downlink data is received, first, blind detection for control information needs to be performed in a control region, and then the data is received by using the control information. However, because both the URLLC data and the control information of the URLLC data are located in the data region of the time-frequency resources, such a downlink data receiving method in the existing LTE system cannot be used to receive the URLLC data.

"URLLC/eMBB downlink dynamic multiplexing schemes" (QUALCOMM INCORPORATED, vol. RAN WG1, no. Spokane, Washington, USA; 20170116 - 20170120, (20170110), 3GPP DRAFT; R1-1700827, 3RD GENERATION PARTNERSHIP PROJECT (3GPP), MOBILE COMPETENCE CENTRE ; 650, ROUTE DES LUCIOLES ; F-06921) proposes that URLLC reserved region chan be used to schedule URLLC control and URLLC data; in the contention region, URLLC can puncture eMBB if needed.

"On multiplexing eMBB and URLLC in DL" (GUANGDONG OPPO MOBILE TELECOM, vol. RAN WG1, no. Spokane, USA; 20170116 - 20170120, (20170109), 3GPP DRAFT; R1-1700572, 3RD GENERATION PARTNERSHIP PROJECT (3GPP), MOBILE COMPETENCE CENTRE ; 650, ROUTE DES LUCIOLES ; F-06921; FRANCE) discloses that explicit indication and implicit indication approach for URLLC indication.

"Uplink URLLC Transmission Based on Scheduling Request and Grant" (INTEL CORPORATION, vol. RAN WG1, no. Spokane, USA; 20170116 - 20170120, (20170110), 3GPP DRAFT; R1-1700376 INTEL - UL SR URLLC, 3RD GENERATION PARTNERSHIP PROJECT (3GPP), MOBILE COMPETENCE CENTRE ; 650, ROUTE DES LUCIOLES ; F-06921) proposes that for URLLC reception, UE is configured to monitor control channel in mini-slots.

"Preemption/superposition-based multiplexing of eMBB and URLLC" (INTERDIGITAL COMMUNICATIONS, vol. RAN WG1, no. Spokane, USA; 20170116 - 20170120, (20170110), 3GPP DRAFT; R1-1700721 PREEMPTION SUPERPOSITION-BASED MULTIPLEXING OF EMBB AND URLLC, 3RD GENERATION PARTNERSHIP PROJECT (3GPP), MOBILE COMPETENCE CENTRE ; 650, ROUTE DES LUCIOLES ; F-06921) proposes the URLLC DL transmissions puncture eMBB transmissions with signaling per scheduling opportunity to indicate which pre-configured time/frequency resources puncture an ongoing longer eMBB transmission.

### SUMMARY

The invention is set out in the appended set of claims. Embodiments of the present invention provide a data receiving method, a data sending method, a receiving device, and a sending device according to the independent claims, to fast and accurately detect URLLC control information from time-frequency resources, and further efficiently receive URLLC data.

In the method for receiving URLLC data provided in the embodiments of the present invention, only one RE in one symbol is used to indicate whether the URLLC control information exists in the current symbol, so that resource overheads are reduced. In addition, when determining, by using the indication RE, that the URLLC control information exists in the current symbol, the receiving device can fast detect the URLLC control information from a preset search space, reducing a URLLC data receiving latency.

### DESCRIPTION OF DRAWINGS

To describe technical solutions in embodiments of the present invention more clearly, the following briefly describes accompanying drawings required for describing the embodiments of the present invention.

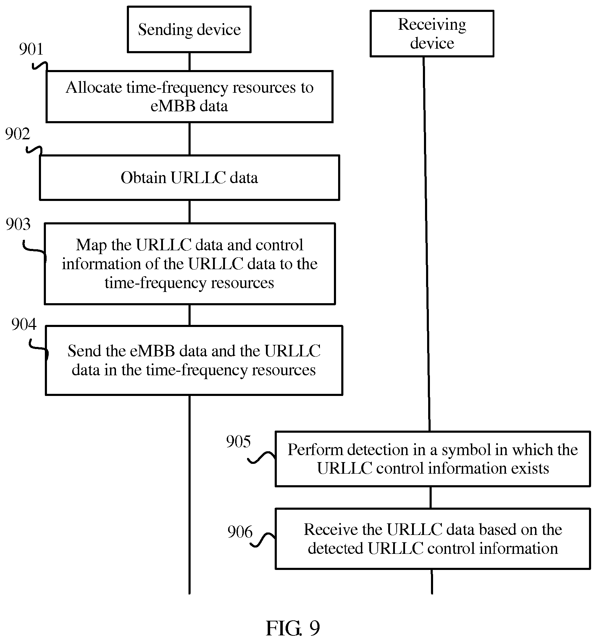

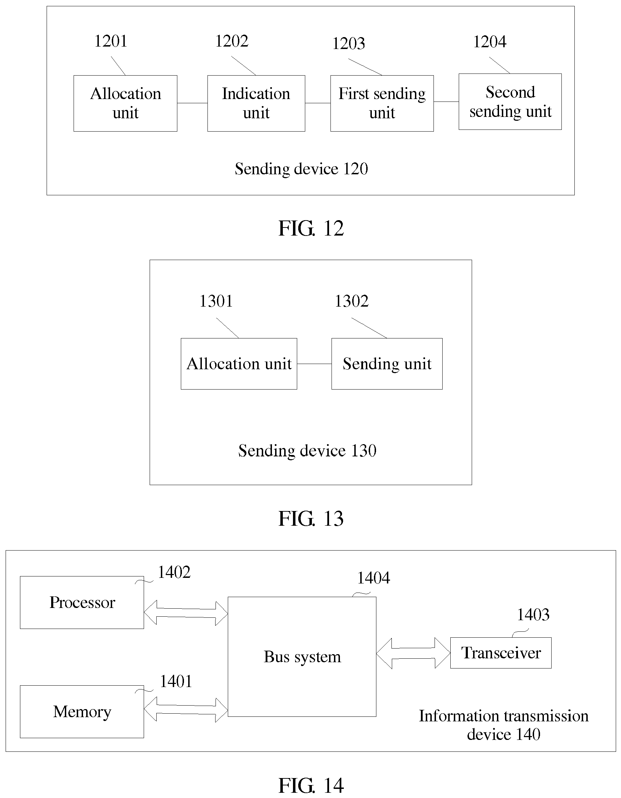

The embodiments shown in FIG. 9 and FIG. 13 are not according to the invention and are present for illustration purposes only.
FIG. 1 is a schematic diagram of implementing time-frequency resource multiplexing for eMBB and URLLC by using a pre-emption technology;
FIG. 2 is a schematic diagram of a system architecture to which an embodiment of the present invention is applicable;
FIG. 3 is a schematic diagram of a method for receiving URLLC data;
FIG. 4 is a schematic flowchart of a method for sending and receiving URLLC data according to an embodiment of the present invention;
FIG. 5 is a schematic diagram of indication based on lower-order modulation according to an embodiment of the present invention;
FIG. 6 is a schematic diagram of indication based on higher-order modulation according to an embodiment of the present invention;
FIG. 7 is a schematic diagram of system bandwidth division according to an embodiment of the present invention;
FIG. 8 is a schematic diagram of a search space according to an embodiment of the present invention;
FIG. 9 is a schematic flowchart of another method for sending and receiving URLLC data according to an embodiment;
FIG. 10 is a schematic structural diagram of a receiving device according to an embodiment of the present invention;
FIG. 11 is a schematic structural diagram of another receiving device according to an embodiment of the present invention;
FIG. 12 is a schematic structural diagram of a sending device according to an embodiment of the present invention;
FIG. 13 is a schematic structural diagram of another sending device according to an embodiment; and
FIG. 14 is a physical structural diagram of an information transmission device according to an embodiment of the present invention.

### DESCRIPTION OF EMBODIMENTS

To make objectives, technical solutions, and advantages of the present invention clearer, the following further describes the present invention in detail with reference to accompanying drawings. Apparently, the described embodiments are only some rather than all of the embodiments of the present invention.

In the specification, claims, and accompanying drawings of this application, terms "first", "second", and the like are intended to distinguish between different objects but do not indicate a particular order. In addition, terms "including", "comprising", or any other variant thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

An information transmission method in the embodiments of the present invention is applicable to a plurality of system architectures. FIG. 2 is a schematic diagram of a system architecture to which an embodiment of the present invention is applicable. As shown in FIG. 2, the system architecture 20 includes a sending device 201 and a receiving device 202. The sending device 201 may transmit information to the receiving device 202 through a network.

In this embodiment of the present invention, the sending device may be a base station (English: base station, BS for short) device. The base station device may also be referred to as a base station, which is an apparatus that is deployed in a radio access network to provide a wireless communication function. For example, in a 2G network, a device providing a base station function includes a base transceiver station (English: base transceiver station, BTS for short) and a base station controller (English: base station controller, BSC for short). In a 3G network, a device providing a base station function includes a NodeB (NodeB) and a radio network controller (English: radio network controller, RNC for short). In a 4G network, a device providing a base station function includes an evolved NodeB (English: evolved NodeB, eNB for short). In a 5G network, a device providing a base station function includes a new radio NodeB (English: New Radio NodeB, gNB for short), a centralized unit (English: Centralized Unit, CU for short), a distributed unit (English: Distributed Unit), and a new radio controller. In a WLAN, a device providing a base station function is an access point (English: Access Point, AP for short).

The receiving device may be a device providing voice and/or data connectivity for a user, including a wired terminal and a wireless terminal. The wireless terminal may be a handheld device having a wireless connection function, or another processing device connected to a wireless modem, or a mobile terminal that communicates with one or more core networks through a radio access network. For example, the wireless terminal may be a mobile phone, a computer, a tablet computer, a personal digital assistant (English: personal digital assistant, PDA for short), a mobile Internet device (English: mobile Internet Device, MID for short), a wearable device, or an e-book reader (English: e-book reader). For another example, the wireless terminal may be a portable, pocket-sized, handheld, computer built-in, or in-vehicle mobile device. For still another example, the wireless terminal may be a part of a mobile station (English: mobile station), an access point (English: access point), or user equipment (English: user equipment, UE for short).

Communications systems to which the foregoing system architecture is applicable include but are not limited to Code Division Multiple Access (English: Code Division Multiple Access, CDMA for short) IS-95, Code Division Multiple Access (English: Code Division Multiple Access, CDMA for short) 2000, Time Division-Synchronous Code Division Multiple Access (English: Time Division-Synchronous Code Division Multiple Access, TD-SCDMA for short), Wideband Code Division Multiple Access (English: Wideband Code Division Multiple Access, WCDMA for short), Time Division Duplex-Long Term Evolution (English: Time Division Duplex-Long Term Evolution, TDD LTE for short), Frequency Division Duplex-Long Term Evolution (English: Frequency Division Duplex-Long Term Evolution, FDD LTE for short), Long Term Evolution-Advanced (English: Long Term Evolution-Advanced, LTE-advanced for short), and various future evolved wireless communications systems (for example, a 5G system).

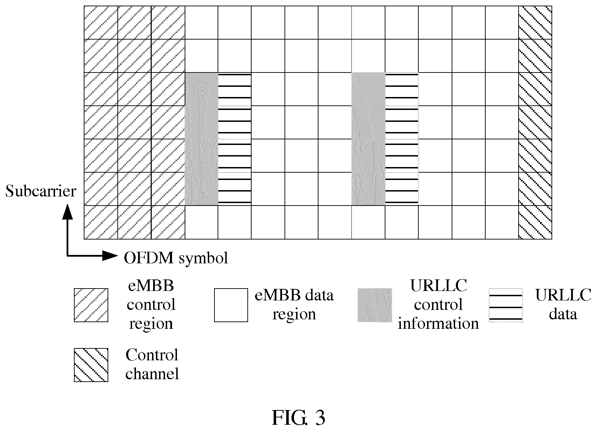

Receiving of URLLC data depends on control information of the URLLC data. When time-frequency resource multiplexing is implemented for eMBB and URLLC by using a pre-emption technology, provided that the control information of the URLLC data is detected from time-frequency resources carrying eMBB data, a receiving device can receive the URLLC data by using the control information. FIG. 3 is a schematic diagram of a method for receiving URLLC data. As shown in the figure, in the method, a control channel is added at an end of an eMBB scheduling period, to indicate information about URLLC data in the eMBB scheduling period. The information includes: a quantity of pieces of the URLLC data in the scheduling period and time-frequency locations of each piece of URLLC data and control information of each piece of URLLC data. In this way, all the URLLC data can be received. However, because the control information is located at the end of the eMBB scheduling period, a receiving device cannot receive the URLLC data until the eMBB scheduling period ends. Consequently, a relatively long URLLC data receiving latency is caused, and a low latency requirement of URLLC cannot be met.

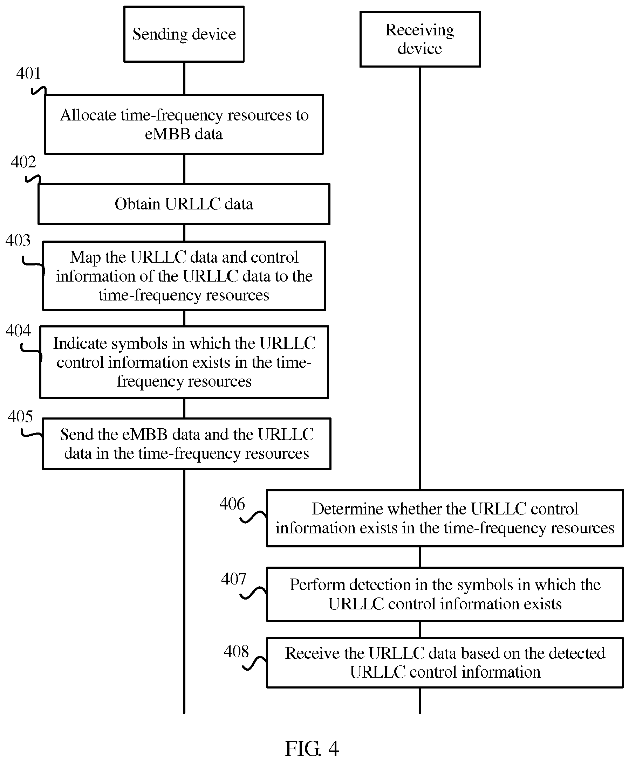

FIG. 4 is a schematic flowchart of a method for sending and receiving URLLC data according to an embodiment of the present invention. The method mainly includes two parts. A first part is URLLC control information indication, and a second part is URLLC control information detection based on the URLLC control information indication. The URLLC control information indication is performed to indicate whether URLLC control information exists in an OFDM symbol (a symbol for short below). Based on the indication, a receiving device performs the URLLC control information detection only in a symbol in which URLLC control information exists, to fast and accurately detect URLLC control information from time-frequency resources at relatively low time-frequency resource overheads and calculation complexity, and further receive the URLLC data. As shown in FIG. 4, the method for sending and receiving URLLC data includes the following steps (unless otherwise stated, there is no particular timing relationship between the following steps).

S401: A sending device allocates time-frequency resources (time-frequency resources for short below) to eMBB data.

This embodiment of the present invention is described by using time-frequency resources of one transmission time interval (English: Transmission Time Interval, TTI for short, which may also be referred to as a scheduling period or a transmission period) as an example.

S402: The sending device obtains URLLC data.

The sending device may receive the URLLC data from a core network element, a gateway, a business server, or the like. This is not limited in this embodiment of the present invention.

S403: The sending device maps the URLLC data and control information of the URLLC data to the time-frequency resources that are allocated to the eMBB data in S401.

S404: The sending device indicates symbols in which the URLLC control information exists in the time-frequency resources.

This embodiment of the present invention provides three URLLC control information indication methods: 1. an indication method based on lower-order modulation; 2. an indication method based on higher-order modulation; and 3. an energy indication method. In all of the three methods, URLLC control information indication is implemented by using an indication resource element (English: Resource Element, RE for short). Each symbol of the time-frequency resources has one indication RE, to indicate whether URLLC control information exists in the current symbol (namely, the symbol in which the indication RE is located, the same below). Indication REs in different symbols may be located on a same subcarrier, or may be located on different subcarriers. When URLLC control information sent to a receiving device spans a plurality of symbols, that the URLLC control information exists may be indicated only on an indication RE in a first symbol of the plurality of symbols, to indicate that the URLLC control information starts from the current symbol.

### 1. Indication method based on lower-order modulation

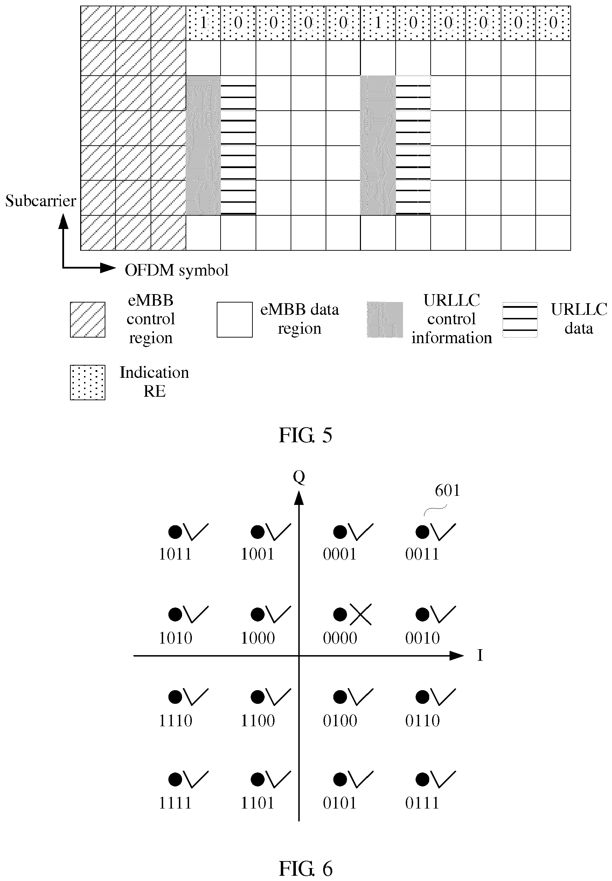

FIG. 5 is a schematic diagram of indication based on lower-order modulation according to an embodiment of the present invention. As shown in FIG. 5, the indication based on lower-order modulation means that the sending device modulates, by using a lower-order modulation technology, for example, binary phase shift keying (English: Binary Phase Shift Keying, BPSK for short), data to be sent on an indication RE. Specifically, after the sending device modulates, by using the lower-order modulation technology, the data to be sent on the indication RE, when a data symbol "1" is sent on the indication RE, it indicates that URLLC control information exists in a current symbol; when a data symbol "0" is sent, it indicates that URLLC control information does not exist in a current symbol. When receiving the data symbol" 1" on the indication RE, the receiving device may determine that the URLLC control information exists in the current symbol; when receiving the data symbol "0", the receiving device may determine that the URLLC control information does not exist in the current symbol. When the URLLC control information spans a plurality of symbols, the sending device may send the data symbol "1" only on an indication RE in a first symbol of the plurality of symbols spanned by the URLLC control information, and send the data symbol "0" on an indication RE in another symbol, or may send the data symbol "1" on an indication RE in each of the plurality of symbols spanned by the URLLC control information. A person skilled in the art should understand that, alternatively, the sending device may send the data symbol "1" on the indication RE to indicate that the URLLC control information does not exist in the current symbol, and send the data symbol "0" to indicate that the URLLC control information exists in the current symbol.

### 2. Indication method based on higher-order modulation

FIG. 6 is a schematic diagram of indication based on higher-order modulation according to an embodiment of the present invention. The indication based on higher-order modulation means that the sending device modulates, by using a higher-order modulation technology, for example, 16-quadrature amplitude modulation (English: 16-Quadrature Amplitude Modulation, 16QAM for short) or 64-quadrature amplitude modulation (English: 64-Quadrature Amplitude Modulation, 64QAM for short), data to be sent on an indication RE. The higher-order modulation is less reliable than the lower-order modulation, and an error easily occurs during data transmission, and causes the receiving device to erroneously determine whether URLLC control information exists in a current symbol, including: determining a fact that the URLLC control information does not exist as that the URLLC control information exists, or determining a fact that the URLLC control information exists as that the URLLC control information does not exist. The former erroneous determining causes the receiving device to perform unnecessary detection once. The latter erroneous determining causes the receiving device to miss the URLLC control information. Apparently, the latter erroneous determining costs much more than the former one. To avoid the latter erroneous determining as far as possible, as shown in FIG. 6, after the sending device modulates, by using the higher-order modulation technology, the data to be sent on the indication RE, when a particular data symbol (for example, "0000") is sent on the indication RE, it indicates that the URLLC control information does not exist in the current symbol; when any data symbol (for example, "1111") other than the particular data symbol is sent on the indication RE, it indicates that the URLLC control information exists in the current symbol. When receiving the data symbol "0000" on the indication RE, the receiving device may determine that the URLLC control information does not exist in the current symbol; when receiving any data symbol other than "0000", the receiving device may determine that the URLLC control information exists in the current symbol. It can be learned from FIG. 6 that, when the sending device sends the data symbol "1111" on the indication RE to indicate that the URLLC control information exists in the current symbol, even though an error occurs and causes the receiving device to erroneously determine the data symbol "1111" as another data symbol (for example, "1110") during demodulation, it may be correctly determined that the URLL control information exists in the current symbol, provided that the data symbol "1111" is not erroneously determined as "0000".

### 3. Energy indication method

In the energy indication method, indication is performed by using energy on an indication RE. Specifically, when URLLC control information does not exist in a current symbol, the sending device does not send any data symbol on the indication RE, in other words, the energy on the indication RE is 0; when URLLC control information exists in a current symbol, the sending device sends, on the indication RE, a data symbol that has highest energy when a current modulation technology is used, for example, a data symbol corresponding to a constellation point 601 in FIG. 6. The receiving device measures a value of the energy on the indication RE. If the value of the energy on the indication RE is less than a preset threshold, it is determined that the URLLC control information does not exist in the current symbol. If the value of the energy on the indication RE is greater than or equal to the preset threshold, it is determined that the URLLC control information exists in the current symbol. The preset threshold is greater than 0. The preset threshold is not 0 for a reason that even though the sending device does not send any signal on the indication RE, the value of the energy on the indication RE is probably greater than 0 because of noise and interference from another cell.

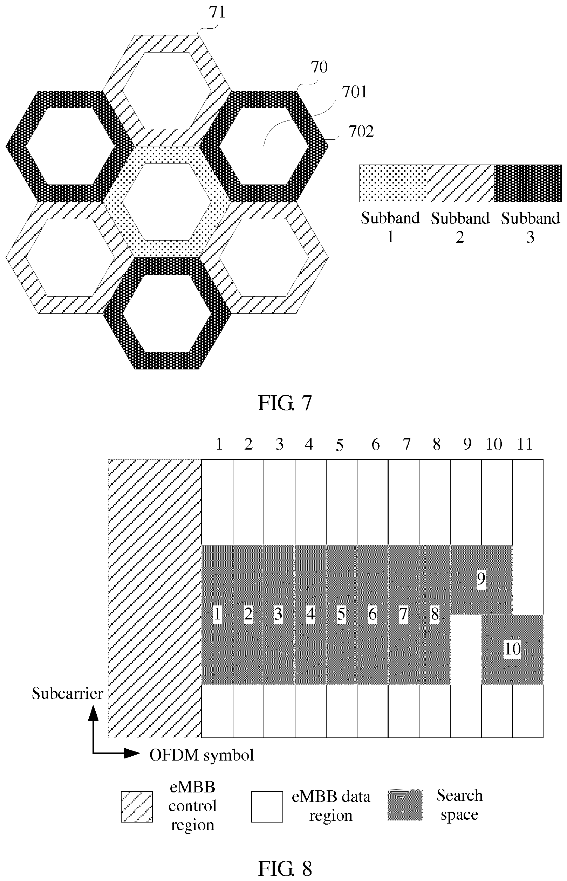

FIG. 7 is a schematic diagram of system bandwidth division according to an embodiment of the present invention. When the energy indication method is used, cell (for example, cell 70) users are classified into a cell center (for example, a cell center 701) user (a center user for short below) and a cell edge (for example, a cell edge 702) user (an edge user for short below). If an edge user in a neighboring cell of a cell in which the sending device is located receives data on an RE that has a same frequency as the indication RE, energy on the RE is superposed on the indication RE, and increases the value of the energy on the indication RE. Consequently, erroneous determining of the receiving device is caused. For example, a fact that the URLLC control information does not exist is determined as that the URLLC control information exists. To reduce a probability of erroneous determining of the receiving device, as shown in FIG. 7, entire system bandwidth of a system to which the sending device and/or the receiving device belong/belongs may be divided into three subbands: a subband 1, a subband 2, and a subband 3, an edge user in each of three neighboring cells uses a frequency of one of the three subbands for data transmission, and a center user in each of the three neighboring cells uses the entire system bandwidth. Edge users in any two neighboring cells use different subbands. In each cell, an RE on a subband used by an edge user in the current cell is used as an indication RE. For example, in the cell 70, an RE on the subband 3 is used as an indication RE, and an edge user in the cell 71 uses an RE on the subband 2 to receive data. In this way, the edge user in the cell 71 receives the data on the RE that has a frequency different from that of the indication RE used in the cell 70, so that the probability of erroneous determining of the receiving device is reduced when the energy indication method is used.

Optionally, when the foregoing three methods are used to indicate the URLLC control information, for each cell, the sending device may add frequency domain location information of the indication RE to a field of a master information block (English: Master Information Block, MIB for short) or a system information block (English: System Information Block, SIB for short), and then send the frequency domain location information of the indication RE to all receiving devices in the cell by using the MIB or the SIB. In the method shown in FIG. 4, the sending device may first perform this step.

S405: The sending device sends the eMBB data and the URLLC data in the time-frequency resources.

S406: A receiving device determines, based on an indication RE, whether the URLLC control information exists in the time-frequency resources.

Refer to the description about how the receiving device determines whether the URLLC control information exists in the time-frequency resources in S404. Details are not described herein again.

S407: The receiving device detects the URLLC control information in the symbols in which the URLLC control information exists.

In an LTE system, downlink control information (English: Downlink Control Information, DCI for short) is sent by using a physical downlink control channel (English: Physical Downlink Control Channel, PDCCH for short). The DCI has a plurality of formats (format), DCI in different formats may have different sizes, a basic unit for carrying the DCI is a control channel element (English: Control Channel Element, CCE for short), and one CCE includes 36 REs. When receiving the DCI, the receiving device neither knows a format of the DCI sent on the current PDCCH, nor knows a location of information needed by the receiving device, but the receiving device knows information currently expected by the receiving device. For different expected information, the receiving device performs CRC check by using a corresponding radio network temporary identifier (English: Radio Network Temporary Identifier, RNTI for short) and CCE order. If the CRC check succeeds, the receiving device determines that the CCE information is needed by the receiving device, and may also determine a corresponding DCI format and modulation scheme, to demodulate and decode DCI content. This is a process of blind detection for DCI in the LTE system.

To improve efficiency of blind detection, a concept of a search space is introduced into the LTE system. The DCI is limited to being in the search space, and the receiving device needs to perform blind detection for the DCI only in the search space. For DCI in some formats, for example, paging (paging), all receiving devices need to listen to the DCI. For DCI in some other formats, for example, an uplink/downlink scheduling instruction, only a particular receiving device is related, and only the particular receiving device needs to listen to the DCI. Therefore, in the LTE system, a common search space (Common Search Space) and a UE-specific search space (UE-Specific Search Space) are further obtained through classification, to further improve efficiency of blind detection of the receiving device.

The search space in the LTE system is located in a control region of time-frequency resources, but URLLC control information is located in a data region of the time-frequency resources. Therefore, a new search space is defined in this embodiment of the present invention. For each receiving device in a cell, each symbol of the receiving device in a data region of time-frequency resources has an entire or partial search space specific to the receiving device. The expression "entire or partial search space" is used because one search space may span a plurality of consecutive symbols. FIG. 8 is a schematic diagram of a search space according to an embodiment of the present invention. As shown in FIG. 8, search spaces 1 to 8 are respectively located in symbols 1 to 8, a search space 9 is located in symbols 9 and 10, and a search space 10 is located in symbols 10 and 11. All the search spaces 1 to 10 are search spaces specific to a receiving device.

The receiving device may obtain a frequency domain location of the search space of the receiving device in each symbol in the data region of the time-frequency resources by using a particular mapping algorithm (for example but not limited to, referring to a manner in the LTE system of calculating a frequency domain location of a search space by using a radio network temporary identifier (English: Radio Network Temporary Identifier, RNTI for short) of a receiving device and a current subframe number). When mapping the obtained URLLC data to the time-frequency resources, the sending device adds the URLLC control information to the search space specific to the receiving device. In this way, the receiving device may first determine symbols in which the URLLC control information exists, and then perform detection in a specific search space in the symbols in which the URLLC control information exists, to increase a URLLC control information detection speed. During detection, the receiving device may use a method for blind detection for DCI in the existing LTE system, or may use another method. This is not limited in this embodiment of the present invention.

S408: The receiving device receives the URLLC data based on the detected URLLC control information.

The receiving device may learn of a transmission parameter of the URLLC data from the detected URLLC control information, and receive the URLLC data based on the transmission parameter.

Compared with the prior art, in the method for sending and receiving URLLC data provided in this embodiment of the present invention, only one RE in one symbol is used to indicate whether the URLLC control information exists in the current symbol, so that resource overheads are reduced. In addition, when determining, by using the indication RE, that the URLLC control information exists in the current symbol, the receiving device can fast detect the URLLC control information from a preset search space, reducing a URLLC data receiving latency.

FIG. 9 is a schematic flowchart of another method for sending and receiving URLLC data according to ar embodiment not according to the invention. In this method, a sending device does not indicate symbols in which URLLC control information exists in time-frequency resources, but according to a preset rule, adds the URLLC control information to some symbols in the time-frequency resources for sending. Correspondingly, a receiving device detects the URLLC control information only in the some symbols. As shown in FIG. 9, the method for sending and receiving URLLC data includes the following steps (unless otherwise stated, there is no particular timing relationship between the following steps).

S901: The sending device allocates time-frequency resources (time-frequency resources for short below) to eMBB data.

This embodiment not according to the invention is described by using time-frequency resources of one transmission time interval (English: Transmission Time Interval, TTI for short, which may also be referred to as a scheduling period or a transmission period) as an example.

S902: The sending device obtains URLLC data.

The sending device may receive the URLLC data from a core network element, a gateway, a business server, or the like. This is not limited in this embodiment not according to the invention.

S903: The sending device maps the URLLC data and control information of the URLLC data to the time-frequency resources that are allocated to the eMBB data in S901.

In this embodiment not according to the invention, the sending device maps the URLLC control information to some symbols in the time-frequency resources according to a preset rule, for example but not limited to, mapping the URLLC control information to a symbol whose index is an odd number (a symbol 1, 3, 5 ...), whose index is an even number (a symbol 2, 4, 6 ...), or whose index is a multiple of 3 (a symbol 3, 6, 9 ...).

For each cell, the sending device may add time domain location information (indicating symbols in which the URLLC control information exists, or a rule according to which the sending device maps the URLLC control information) of the URLLC control information to a field of a MIB or a SIB, and then send the time domain location information of the URLLC control information to all receiving devices in the cell by using the MIB or the SIB. In the method shown in FIG. 9, the sending device may first perform this step.

S904: The sending device sends the eMBB data and the URLLC data in the time-frequency resources.

S905: The receiving device detects the URLLC control information in a symbol in which the URLLC control information exists.

In this embodiment not according to the invention, based on the design of the search space shown in FIG. 8, a location of the search space is further limited to being in the symbol in which the URLLC control information is located. By way of example without limitation, when the sending device adds the URLLC control information to the symbol whose index is an odd number, whose index is an even number, or whose index is a multiple of 3 for sending, a search space specific to the receiving device is correspondingly located in the symbol whose index is an odd number, whose index is an even number, or whose index is a multiple of 3. When a search space spans a plurality of consecutive symbols, in this embodiment not according to the invention, a start symbol of the search space may be limited to being the symbol in which the URLLC control information exists. For example, when the sending device adds the URLLC control information to the symbol whose index is an odd number for sending, the start symbol of the search space may be the symbol 1, 3, 5 ..., and if the search space spans two consecutive symbols, the receiving device detects the URLLC control information in the search space in symbols 1 and 2.

S906: The receiving device receives the URLLC data based on the detected URLLC control information.

The receiving device may learn of a transmission parameter of the URLLC data (for example but not limited to, a time-frequency resource occupied by the URLLC data and a modulation and coding scheme used for the URLLC data, so that the receiving device may demodulate and decode the URLLC data based on the modulation and coding scheme) from the detected URLLC control information, and receive the URLLC data based on the transmission parameter.

In this embodiment not according to the invention, of the present invention, when control information is added to some symbols according to a preset rule for sending, for example, when the URLLC control information is sent only in the symbol whose index is an odd number, a URLLC data receiving latency may occur. Because of a low latency characteristic of the URLLC data, the sending device performs, anytime for the URLLC data, puncturing in the time-frequency resources carrying the eMBB data. For example, the URLLC data needs to be sent on a symbol 6, but according to the rule, the URLLC control information is sent only in the symbol whose index is an odd number. Therefore, the URLLC data needs to wait to be sent together with the control information in a symbol 7. A latency of one symbol is caused. To avoid the latency, in this embodiment not according to the invention, the data may be sent before the control information of the data. In the foregoing example, the URLLC data may be directly sent in the symbol 6, and then the control information of the URLLC data is sent in the symbol 7, to avoid the URLLC data receiving latency.

Compared with the prior art, in the method for sending and receiving URLLC data provided in this embodiment not according to the invention, no time-frequency resource is occupied to indicate whether the URLLC control information exists in the current symbol, so that resource overheads are further reduced. In addition, the receiving device can fast detect the URLLC control information from a preset search space, reducing a URLLC data receiving latency.

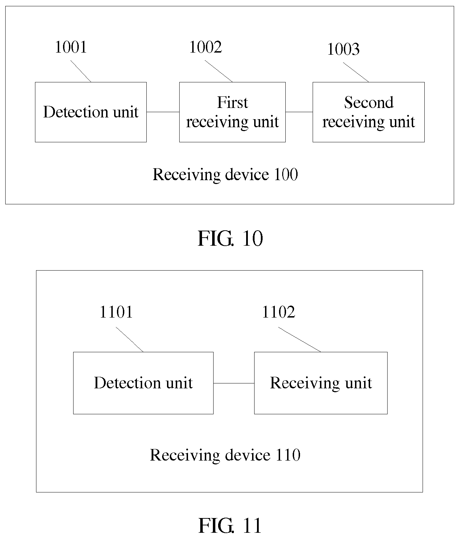

FIG. 10 is a schematic structural diagram of a receiving device according to an embodiment of the present invention. The receiving device 100 is configured to perform the method on the receiving device side shown in FIG. 4, receiving URLLC data from time-frequency resources. The time-frequency resources include eMBB data and the URLLC data, the time-frequency resources further include an OFDM symbol, the OFDM symbol includes an indication resource element RE, the indication RE indicates whether URLLC control information exists in the OFDM symbol, and the receiving device includes:
a detection unit 1001, configured to: when the indication RE indicates that the URLLC control information exists in the OFDM symbol, detect the URLLC control information in the OFDM symbol; and
a first receiving unit 1002, configured to receive the URLLC data based on the detected URLLC control information.

Optionally, the receiving device further includes a second receiving unit 1003, configured to receive, from a sending device, a message indicating a subcarrier on which the indication RE is located.

Optionally, the detection unit 1001 is further configured to detect the URLLC control information in a search space in the OFDM symbol.

FIG. 11 is a schematic structural diagram of another receiving device according to an embodiment of the present invention. The receiving device 110 is configured to perform the method on the receiving device side shown in FIG. 9, receiving URLLC data from time-frequency resources. The time-frequency resources include a plurality of OFDM symbols, only some of the plurality of OFDM symbols include a search space specific to the receiving device, the some OFDM symbols include a first OFDM symbol, the search space in the first OFDM symbol includes URLLC control information, and the receiving device includes:
a detection unit 1101, configured to detect the URLLC control information in the search space in the first OFDM symbol; and
a receiving unit 1102, configured to receive the URLLC data based on the URLLC control information.

FIG. 12 is a schematic structural diagram of a sending device according to an embodiment of the present invention. The sending device 120 is configured to perform the method on the sending device side shown in FIG. 4, and includes:
an allocation unit 1201, configured to allocate time-frequency resources to eMBB data;
an indication unit 1202, configured to indicate, by using an indication resource element RE, whether URLLC control information exists in an OFDM symbol in the time-frequency resources, where the indication RE is an RE in the OFDM symbol, and the URLLC control information includes a transmission parameter of URLLC data; and
a first sending unit 1203, configured to send the eMBB data and the URLLC data in the time-frequency resources.

Optionally, the indication unit 1202 is further configured to: indicate, by sending a first data symbol on the indication RE, that the URLLC control information exists in the OFDM symbol; or indicate, by sending a second data symbol on the indication RE, that the URLLC control information does not exist in the OFDM symbol.

Optionally, the indication unit 1202 is further configured to: indicate, by sending a data symbol having highest energy on the indication RE, that the URLLC control information exists in the OFDM symbol; or indicate, by sending no data symbol on the indication RE, that the URLLC control information does not exist in the OFDM symbol.

Optionally, the sending device 120 further includes a second sending unit 1204, configured to send, to a receiving device, a message indicating a subcarrier on which the indication RE is located.

FIG. 13 is a schematic structural diagram of another sending device according to an embodiment not according to the invention. The sending device 130 is configured to perform the method on the sending device side shown in FIG. 9, and includes:
an allocation unit 1301, configured to allocate time-frequency resources to eMBB data; and
a sending unit 1302, configured to send the eMBB data and URLLC data by using the time-frequency resources, where the time-frequency resources include a plurality of OFDM symbols, only some of the plurality of OFDM symbols include a search space specific to a receiving device, the some OFDM symbols include a first OFDM symbol, the search space in the first OFDM symbol includes URLLC control information, and the URLLC control information includes a transmission parameter of the URLLC data.

FIG. 14 is a physical structural diagram of an information transmission device according to an embodiment of the present invention. The device 140 may be configured to perform the method on the sending device side or the method on the receiving device side shown in FIG. 4, or the method on the sending device side or the method on the receiving device side shown in FIG. 9. The device 140 includes: a memory 1401, a processor 1402, a transceiver 1403, and a bus system 1404.

The memory 1401 is configured to store a program. Specifically, the program may include program code, and the program code includes a computer operation instruction. The memory 1401 may be a random access memory (random access memory, RAM for short), or may be a non-volatile memory (non-volatile memory), for example, at least one magnetic disk memory. Only one memory is shown in the figure. Certainly, a plurality of memories may be provided as required. Alternatively, the memory 1401 may be a memory in the processor 1402.

The memory 1401 stores the following elements: an executable module or a data structure, a subset thereof, or an extended set thereof:
an operation instruction, including various operation instructions and used to implement various operations; and
an operating system, including various system programs and used to implement various basic services and process a hardware-based task.

The processor 1402 controls an operation of the device 140, and the processor 1402 may also be referred to as a CPU (Central Processing Unit, central processing unit). In a specific application, components of the device 140 are coupled together by using the bus system 1404. In addition to a data bus, the bus system 1404 may further include a power bus, a control bus, a status signal bus, and the like. However, for clear description, various types of buses in the figure are marked as the bus system 1404. For ease of illustration, FIG. 14 merely shows an example of the bus system 1404.

The methods disclosed in the embodiments of this application may be applied to the processor 1402, or may be implemented by the processor 1402. The processor 1402 may be an integrated circuit chip and has a signal processing capability. In an implementation process, steps in the foregoing methods can be implemented by using a hardware integrated logic circuit in the processor 1402, or by using instructions in a form of software. The processor 1402 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1402 may implement or perform the methods, the steps, and logical block diagrams disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware in the decoding processor and a software module. The software module may be located in a mature storage medium in the art, such as a random access memory, a flash memory, a read-only memory, a programmable read-only memory, an electrically erasable programmable memory, a register, or the like. The storage medium is located in the memory 1401. The processor 1402 reads information in the memory 1401, and performs the foregoing steps of methods in combination with hardware of the processor 1402.

A person of ordinary skill in the art may understand that, all or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of the present invention are generated. The computer may be a general purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A method for receiving ultra-reliable and low latency communication URLLC data from time-frequency resources, applied to a receiving device, wherein the time-frequency resources comprise enhanced mobile broadband eMBB data and the URLLC data, the time-frequency resources further comprise an orthogonal frequency division multiplexing OFDM symbol, the OFDM symbol comprises an indication resource element RE, the indication RE indicates whether URLLC control information exists in the OFDM symbol, and the method comprises:
when the indication RE indicates that the URLLC control information exists in the OFDM symbol, detecting the URLLC control information in the OFDM symbol; and
receiving the URLLC data based on the detected URLLC control information,
wherein that the indication RE indicates whether URLLC control information exists in the OFDM symbol comprises:
when the indication RE comprises a first data symbol, the URLLC control information exists in the OFDM symbol; or when the indication RE comprises a second data symbol, the URLLC control information does not exist in the OFDM symbol; or
wherein that the indication RE indicates whether URLLC control information exists in the OFDM symbol comprises:
when a value of energy on the indication RE is greater than or equal to a preset threshold, the URLLC control information exists in the OFDM symbol; or when a value of energy on the indication RE is less than a preset threshold, the URLLC control information does not exist in the OFDM symbol.

2. The method according to claim 1, wherein system bandwidth of a communications system to which the receiving device currently belongs is divided into a plurality of subbands, and the indication RE is on one of the plurality of subbands.

3. The method according to any one of claims 1 to 2, wherein before the detecting the URLLC control information in the OFDM symbol, the method further comprises:
receiving, from a sending device, a message indicating a subcarrier on which the indication RE is located.

4. A method for sending ultra-reliable and low latency communication URLLC data, applied to a sending device, wherein the method comprises:
allocating time-frequency resources to enhanced mobile broadband eMBB data;
indicating, by using an indication resource element RE, whether URLLC control information exists in an orthogonal frequency division multiplexing OFDM symbol in the time-frequency resources, wherein the indication RE is an RE in the OFDM symbol, and the URLLC control information comprises a transmission parameter of the URLLC data; and
sending the eMBB data and the URLLC data in the time-frequency resources,
wherein the indicating, by using an indication RE, whether URLLC control information exists in an OFDM symbol in the time-frequency resources comprises:
indicating, by sending a first data symbol on the indication RE, that the URLLC control information exists in the OFDM symbol; or indicating, by sending a second data symbol on the indication RE, that the URLLC control information does not exist in the OFDM symbol; or
wherein the indicating, by using an indication RE, whether URLLC control information exists in an OFDM symbol in the time-frequency resources comprises:
indicating, by sending a data symbol having highest energy on the indication RE, that the URLLC control information exists in the OFDM symbol; or indicating, by sending no data symbol on the indication RE, that the URLLC control information does not exist in the OFDM symbol.

5. A receiving device, wherein the receiving device is configured to receive ultra-reliable and low latency communication URLLC data from time-frequency resources, the time-frequency resources comprise enhanced mobile broadband eMBB data and the URLLC data, the time-frequency resources further comprise an orthogonal frequency division multiplexing OFDM symbol, the OFDM symbol comprises an indication resource element RE, the indication RE indicates whether URLLC control information exists in the OFDM symbol, and the receiving device comprises:
a detection unit, configured to: when the indication RE indicates that the URLLC control information exists in the OFDM symbol, detect the URLLC control information in the OFDM symbol; and
a first receiving unit, configured to receive the URLLC data based on the detected URLLC control information,
wherein that the indication RE indicates whether URLLC control information exists in the OFDM symbol comprises:
when the indication RE comprises a first data symbol, the URLLC control information exists in the OFDM symbol; or when the indication RE comprises a second data symbol, the URLLC control information does not exist in the OFDM symbol; or
wherein that the indication RE indicates whether URLLC control information exists in the OFDM symbol comprises:
when a value of energy on the indication RE is greater than or equal to a preset threshold, the URLLC control information exists in the OFDM symbol; or when a value of energy on the indication RE is less than a preset threshold, the URLLC control information does not exist in the OFDM symbol.

6. The receiving device according to claim 5, configured to implement the method in accordance with any one of claims 2 to 3.

7. A sending device, comprising:
an allocation unit, configured to allocate time-frequency resources to enhanced mobile broadband eMBB data;
an indication unit, configured to indicate, by using an indication resource element RE, whether ultra-reliable and low latency communication URLLC control information exists in an orthogonal frequency division multiplexing OFDM symbol in the time-frequency resources, wherein the indication RE is an RE in the OFDM symbol, and the URLLC control information comprises a transmission parameter of URLLC data; and
a first sending unit, configured to send the eMBB data and the URLLC data in the time-frequency resources,
wherein the indication unit is further configured to indicate, by sending a first data symbol on the indication RE, that the URLLC control information exists in the OFDM symbol; or indicate, by sending a second data symbol on the indication RE, that the URLLC control information does not exist in the OFDM symbol; or
wherein the indication unit is further configured to indicate, by sending a data symbol having highest energy on the indication RE, that the URLLC control information exists in the OFDM symbol; or indicate, by sending no data symbol on the indication RE, that the URLLC control information does not exist in the OFDM symbol.

## Patentansprüche

1. Verfahren zum Empfangen von ultrazuverlässigen und latenzarmen Kommunikations-URLLC-Daten von Zeit-Frequenz-Ressourcen, angewandt auf eine Empfangsvorrichtung, wobei die Zeit-Frequenz-Ressourcen erweiterte mobile Breitband-, eMBB-Daten und die URLLC-Daten umfassen, wobei die Zeit-Frequenz-Ressourcen ferner ein orthogonales Frequenz-Divisions-Multiplexing-, OFDM-Symbol umfassen, wobei das OFDM-Symbol ein Angaberessourcenelement, RE, umfasst, wobei das Angabe-RE angibt, ob URLLC-Steuerinformationen in dem OFDM-Symbol vorhanden sind, und das Verfahren Folgendes umfasst:
wenn das Angabe-RE angibt, dass die URLLC-Steuerinformationen in dem OFDM-Symbol vorhanden sind, Erfassen der URLLC-Steuerinformationen in dem OFDM-Symbol; und
Empfangen der URLLC-Daten basierend auf den erfassten URLLC-Steuerinformationen,
wobei, dass das Angabe-RE angibt, ob URLLC-Steuerinformationen in dem OFDM-Symbol vorhanden sind, Folgendes umfasst:
wenn das Angabe-RE ein erstes Datensymbol umfasst, sind die URLLC-Steuerinformationen in dem OFDM-Symbol vorhanden; oder wenn das Angabe-RE ein zweites Datensymbol umfasst, sind die URLLC-Steuerinformationen nicht in dem OFDM-Symbol vorhanden; oder
wobei, dass das Angabe-RE angibt, ob URLLC-Steuerinformationen in dem OFDM-Symbol vorhanden sind, Folgendes umfasst:
wenn ein Wert von Energie an dem Angabe-RE größer als ein oder gleich einem voreingestellten Schwellenwert ist, sind die URLLC-Steuerinformationen in dem OFDM-Symbol vorhanden; oder wenn ein Wert von Energie an dem Angabe-RE kleiner als ein voreingestellter Schwellenwert ist, sind die URLLC-Steuerinformationen nicht in dem OFDM-Symbol vorhanden.

2. Verfahren nach Anspruch 1, wobei Systembandbreite eines Kommunikationssystems, zu dem die Empfangsvorrichtung aktuell gehört, in eine Vielzahl von Teilbändern geteilt ist und das Angabe-RE auf einem von der Vielzahl von Teilbändern ist.

3. Verfahren nach einem der Ansprüche 1 bis 2, wobei vor dem Erfassen der URLLC-Steuerinformationen in dem OFDM-Symbol das Verfahren ferner Folgendes umfasst:
Empfangen, von einer Sendevorrichtung, einer Nachricht, die einen Teilträger angibt, an dem sich das Angabe-RE befindet.

4. Verfahren zum Senden von ultrazuverlässigen und latenzarmen Kommunikations-URLLC-Daten, angewandt auf eine Sendevorrichtung, wobei das Verfahren Folgendes umfasst:
Zuweisen von Zeit-Frequenz-Ressourcen zu erweiterten mobilen Breitband-eMBB-Daten;
Angeben, durch Verwenden eines Angaberessourcenelements, RE, ob URLLC-Steuerinformationen in einem orthogonalen Frequenz-Divisions-Multiplexing-OFDM-Symbol in den Zeit-Frequenz-Ressourcen vorhanden sind, wobei das Angabe-RE ein RE in dem OFDM-Symbol ist und die URLLC-Steuerinformationen einen Übertragungsparameter der URLLC-Daten umfassen; und
Senden der eMBB-Daten und der URLLC-Daten in den Zeit-Frequenz-Ressourcen,
wobei das Angeben, durch Verwenden eines Angabe-RE, ob URLLC-Steuerinformationen in einem OFDM-Symbol in den Zeit-Frequenz-Ressourcen vorhanden sind, Folgendes umfasst:
Angeben, durch Senden eines ersten Datensymbols an dem Angabe-RE, dass die URLLC-Steuerinformationen in dem OFDM-Symbol vorhanden sind; oder Angeben, durch Senden eines zweiten Datensymbols an dem Angabe-RE, dass die URLLC-Steuerinformationen nicht in dem OFDM-Symbol vorhanden sind; oder
wobei das Angeben, durch Verwenden eines Angabe-RE, ob URLLC-Steuerinformationen in einem OFDM-Symbol in den Zeit-Frequenz-Ressourcen vorhanden sind, Folgendes umfasst:
Angeben, durch Senden eines Datensymbols mit höchster Energie an dem Angabe-RE, dass die URLLC-Steuerinformationen in dem OFDM-Symbol vorhanden sind; oder Angeben, durch Senden keines Datensymbols an dem Angabe-RE, dass die URLLC-Steuerinformationen nicht in dem OFDM-Symbol vorhanden sind.

5. Empfangsvorrichtung, wobei die Empfangsvorrichtung konfiguriert ist, um ultrazuverlässige und latenzarme Kommunikations-URLLC-Daten von Zeit-Frequenz-Ressourcen zu empfangen, wobei die Zeit-Frequenz-Ressourcen erweiterte mobile Breitband-eMBB-Daten und die URLLC-Daten umfassen, wobei die Zeit-Frequenz-Ressourcen ferner ein orthogonales Frequenz-Divisions-Multiplexing-OFDM-Symbol umfassen, wobei das OFDM-Symbol ein Angaberessourcenelement, RE, umfasst, wobei das Angabe-RE angibt, ob URLLC-Steuerinformationen in dem OFDM-Symbol vorhanden sind, und die Empfangsvorrichtung Folgendes umfasst:
eine Erfassungseinheit, die für Folgendes konfiguriert ist: wenn das Angabe-RE angibt, dass die URLLC-Steuerinformationen in dem OFDM-Symbol vorhanden sind, Erfassen der URLLC-Steuerungsinformationen in dem OFDM-Symbol; und
eine erste Empfangseinheit, die konfiguriert ist, um die URLLC-Daten basierend auf den erfassten URLLC-Steuerinformationen zu empfangen,
wobei, dass das Angabe-RE angibt, ob URLLC-Steuerinformationen in dem OFDM-Symbol vorhanden sind, Folgendes umfasst:
wenn das Angabe-RE ein erstes Datensymbol umfasst, sind die URLLC-Steuerinformationen in dem OFDM-Symbol vorhanden; oder wenn das Angabe-RE ein zweites Datensymbol umfasst, sind die URLLC-Steuerinformationen nicht in dem OFDM-Symbol vorhanden; oder
wobei, dass das Angabe-RE angibt, ob URLLC-Steuerinformationen in dem OFDM-Symbol vorhanden sind, Folgendes umfasst:
wenn ein Wert von Energie an dem Angabe-RE größer als ein oder gleich einem voreingestellten Schwellenwert ist, sind die URLLC-Steuerinformationen in dem OFDM-Symbol vorhanden; oder wenn ein Wert von Energie an dem Angabe-RE kleiner als ein voreingestellter Schwellenwert ist, sind die URLLC-Steuerinformationen nicht in dem OFDM-Symbol vorhanden.

6. Empfangsvorrichtung nach Anspruch 5, die konfiguriert ist, um das Verfahren nach einem der Ansprüche 2 bis 3 zu implementieren.

7. Sendevorrichtung, umfassend:
eine Zuweisungseinheit, die konfiguriert ist, um Zeit-Frequenz-Ressourcen zu erweiterten mobilen Breitband-eMBB-Daten zuzuweisen;
eine Angabeeinheit, die konfiguriert ist, um, durch Verwenden eines Angaberessourcenelements, RE anzugeben, ob ultrazuverlässige und latenzarme Kommunikations-URLLC-Steuerinformationen in einem orthogonalen Frequenz-Divisions-Multiplexing-OFDM-Symbol in den Zeit-Frequenz-Ressourcen vorhanden sind, wobei das Angabe-RE ein RE in dem OFDM-Symbol ist, und die URLLC-Steuerinformationen einen Übertragungsparameter von URLLC-Daten umfassen; und
eine erste Sendeeinheit, die konfiguriert ist, um die eMBB-Daten und die URLLC-Daten in den Zeit-Frequenz-Ressourcen zu senden,
wobei die Angabeeinheit ferner konfiguriert ist, um durch Senden eines ersten Datensymbols an dem Angabe-RE anzugeben, dass die URLLC-Steuerinformationen in dem OFDM-Symbol vorhanden sind; oder durch Senden eines zweiten Datensymbols an dem Angabe-RE anzugeben, dass die URLLC-Steuerinformationen nicht in dem OFDM-Symbol vorhanden sind; oder
wobei die Angabeeinheit ferner konfiguriert ist, um durch Senden eines Datensymbols mit höchster Energie an dem Angabe-RE anzugeben, dass die URLLC-Steuerinformationen in dem OFDM-Symbol vorhanden sind; oder durch Senden eines Datensymbols an dem Angabe-RE anzugeben, dass die URLLC-Steuerinformationen nicht in dem OFDM-Symbol vorhanden sind.

## Revendications

1. Procédé de réception de données de communication à faible latence et ultra-fiables URLLC à partir de ressources temps-fréquence, appliqué à un dispositif de réception, dans lequel les ressources temps-fréquence comprennent des données à large bande mobile améliorées eMBB et les données URLLC, les ressources temps-fréquence comprennent en outre un symbole à multiplexage par répartition orthogonale de la fréquence OFDM, le symbole OFDM comprend un élément de ressource RE d'indication, le RE d'indication indique si des informations de contrôle URLLC existent dans le symbole OFDM, et le procédé comprend :
lorsque le RE d'indication indique que les informations de contrôle URLLC existent dans le symbole OFDM, la détection des informations de contrôle URLLC dans le symbole OFDM ; et
la réception des données URLLC sur la base des informations de contrôle URLLC détectées,
dans lequel le RE d'indication indique si des informations de contrôle URLLC existent dans le symbole OFDM comprend :
lorsque le RE d'indication comprend un premier symbole de données, les informations de contrôle URLLC existent dans le symbole OFDM ; ou lorsque le RE d'indication comprend un second symbole de données, les informations de contrôle URLLC n'existent pas dans le symbole OFDM ; ou
dans lequel le RE d'indication indique si des informations de contrôle URLLC existent dans le symbole OFDM comprend :
lorsqu'une valeur d'énergie sur le RE d'indication est supérieure ou égale à un seuil prédéfini, les informations de contrôle URLLC existent dans le symbole OFDM ; ou lorsqu'une valeur d'énergie sur le RE d'indication est inférieure à un seuil prédéfini, les informations de contrôle URLLC n'existent pas dans le symbole OFDM.

2. Procédé selon la revendication 1, dans lequel la bande passante de système d'un système de communication auquel appartient actuellement le dispositif de réception est divisée en une pluralité de sous-bandes, et le RE d'indication est sur l'une de la pluralité de sous-bandes.

3. Procédé selon l'une quelconque des revendications 1 et 2, dans lequel avant la détection des informations de contrôle URLLC dans le symbole OFDM, le procédé comprend en outre :
la réception, en provenance d'un dispositif d'envoi, d'un message indiquant une sous-porteuse sur laquelle se trouve le RE d'indication.

4. Procédé d'envoi de données de communication à faible latence et ultra-fiables URLLC, appliqué à un dispositif d'envoi, dans lequel le procédé comprend :
l'attribution de ressources temps-fréquence aux données à large bande mobile améliorées eMBB ;
le fait d'indiquer, à l'aide d'un élément de ressource RE d'indication, si des informations de contrôle URLLC existent dans un symbole à multiplexage par répartition orthogonale de la fréquence OFDM dans les ressources temps-fréquence, dans lequel le RE d'indication est un RE dans le symbole OFDM, et les informations de contrôle URLLC comprennent un paramètre de transmission des données URLLC ; et
l'envoi des données eMBB et des données URLLC dans les ressources temps-fréquence,
dans lequel le fait d'indiquer, à l'aide d'un RE d'indication, si des informations de contrôle URLLC existent dans un symbole OFDM dans les ressources temps-fréquence comprend :
l'indication, en envoyant un premier symbole de données sur le RE d'indication, que les informations de contrôle URLLC existent dans le symbole OFDM ; ou l'indication, en envoyant un second symbole de données sur le RE d'indication, que les informations de contrôle URLLC n'existent pas dans le symbole OFDM ; ou
dans lequel le fait d'indiquer, à l'aide d'un RE d'indication, si des informations de contrôle URLLC existent dans un symbole OFDM dans les ressources temps-fréquence comprend :
l'indication, en envoyant un symbole de données ayant la plus haute énergie sur le RE d'indication, que les informations de contrôle URLLC existent dans le symbole OFDM ; ou l'indication, en n'envoyant aucun symbole de données sur le RE d'indication, que les informations de contrôle URLLC n'existent pas dans le symbole OFDM.

5. Dispositif de réception, dans lequel le dispositif de réception est configuré pour recevoir des données de communication à faible latence et ultra-fiables URLLC à partir de ressources temps-fréquence, les ressources temps-fréquence comprennent des données à large bande mobile améliorées eMBB et les données URLLC, les ressources temps-fréquence comprennent en outre un symbole à multiplexage par répartition orthogonale de la fréquence OFDM, le symbole OFDM comprend un élément de ressource RE d'indication, le RE d'indication indique si des informations de contrôle URLLC existent dans le symbole OFDM, et le dispositif de réception comprend :
une unité de détection, configurée pour : lorsque le RE d'indication indique que les informations de contrôle URLLC existent dans le symbole OFDM, détecter les informations de contrôle URLLC dans le symbole OFDM ; et
une première unité de réception, configurée pour recevoir les données URLLC sur la base des informations de contrôle URLLC détectées,
dans lequel le RE d'indication indique si des informations de contrôle URLLC existent dans le symbole OFDM comprend :
lorsque le RE d'indication comprend un premier symbole de données, les informations de contrôle URLLC existent dans le symbole OFDM ; ou lorsque le RE d'indication comprend un second symbole de données, les informations de contrôle URLLC n'existent pas dans le symbole OFDM ; ou
dans lequel le RE d'indication indique si des informations de contrôle URLLC existent dans le symbole OFDM comprend :
lorsqu'une valeur d'énergie sur le RE d'indication est supérieure ou égale à un seuil prédéfini, les informations de contrôle URLLC existent dans le symbole OFDM ; ou lorsqu'une valeur d'énergie sur le RE d'indication est inférieure à un seuil prédéfini, les informations de contrôle URLLC n'existent pas dans le symbole OFDM.

6. Dispositif de réception selon la revendication 5, configuré pour mettre en œuvre le procédé selon l'une quelconque des revendications 2 et 3.

7. Dispositif d'envoi, comprenant :
une unité d'attribution, configurée pour attribuer des ressources temps-fréquence à des données à large bande mobile améliorées eMBB ;
une unité d'indication, configurée pour indiquer, à l'aide d'un élément de ressource RE d'indication, si des informations de contrôle de communication à faible latence et ultra-fiables URLLC existent dans un symbole à multiplexage par répartition orthogonale de la fréquence OFDM dans les ressources temps-fréquence, dans lequel le RE d'indication est un RE dans le symbole OFDM, et les informations de contrôle URLLC comprennent un paramètre de transmission de données URLLC ; et
une première unité d'envoi, configurée pour envoyer les données eMBB et les données URLLC dans les ressources temps-fréquence,
dans lequel l'unité d'indication est en outre configurée pour indiquer, en envoyant un premier symbole de données sur le RE d'indication, que les informations de contrôle URLLC existent dans le symbole OFDM ; ou indiquer, en envoyant un second symbole de données sur le RE d'indication, que les informations de contrôle URLLC n'existent pas dans le symbole OFDM ; ou
dans lequel l'unité d'indication est en outre configurée pour indiquer, en envoyant un symbole de données ayant la plus haute énergie sur le RE d'indication, que les informations de contrôle URLLC existent dans le symbole OFDM ; ou indiquer, en n'envoyant aucun symbole de données sur le RE d'indication, que les informations de contrôle URLLC n'existent pas dans le symbole OFDM.
